# EUROPEAN PATENT SPECIFICATION

(11) **EP 1 204 261 B1**
(45) Date of publication and mention of the grant of the patent: **29.12.2004**
(21) Application number: 01124127.0
(22) Date of filing: 10.10.2001
(51) Int. Cl.: H04M 1/725, H04M 1/73

(54) **Wireless communication device with selective power supply function**
Schnurloses Kommunikationsgerät mit selektiver Stromversorgungsfunktion
Appareil de communication sans fil muni d'une fonction d'alimentation en énergie sélective

(30) Priority: 11.10.2000 JP 2000311227
(43) Date of publication of application: 08.05.2002
(73) Proprietor: NEC CORPORATION, Tokyo (JP)
(72) Inventor: Tamukai, Kiyoshi, Minato-ku, Tokyo (JP)
(74) Representative: von Samson-Himmelstjerna, Friedrich R., Dipl.-Phys.

(56) References cited:
- EP-A- 0 792 077
- EP-A- 0 831 414
- EP-A- 1 033 859

## Description

The present invention relates to a wire-less communication device, and more particularly to an improved wireless mobile terminal device such as a wireless mobile telephone.

The closest prior art, EP 1 033 859 A2, discloses an electronic device comprising several features such as telephone, PDA etc. in which the telephone functions can be completely disabled as a whole without distinguishing between the receiving and transmitting functions.

One of the serious issues with wireless mobile terminals or wireless mobile telephones is an influence of a radio wave transmitted therefrom to any electric, electronic or electron devices, for example, electric or electronic medical instruments, pacemakers, and electric or electronic aircraft instruments. In general, the use of wireless mobile terminals or wireless mobile telephones emitting or transmitting the radio wave is inhibited in hospitals, airplanes and other radio-wave-transmission inhibited areas. The wireless mobile telephone in power-ON state is capable of automatically transmitting the radio wave upon receipt of a call, for which reason it is required to place the mobile telephone into power-OFF state in radio-wave-emission inhibited areas.

In general, advanced mobile telephones accommodate memories for storing any data such as telephone numbers for automatic dialing to send a call to another telephone and further storing other useful informations to be displayed and/or browsed. Upon sending a call to another telephone and receiving a call from another telephone, the radio wave is emitted or transmitted from the wireless mobile telephone. However, displaying and browsing the useful informations on the wireless mobile telephone and hearing the voice informations are available without emitting the radio wave from the wireless mobile telephone. Other operations of writing, reading and erasing data such as telephone numbers are also available without emitting the radio wave from the wireless mobile telephone.

The conventional wireless mobile telephone is, however, capable of displaying and browsing the useful informations, hearing the voice informations and of other operations of writing, reading and erasing data such as telephone numbers but only when the wireless mobile telephone is placed in the power-ON state, where the conventional wireless mobile telephone may automatically emit or transmit the radio wave upon unpredictable receipt of a call from another telephone. In the radio-wave-emission inhibited areas such as hospitals and airplanes, it is necessary to keep the wireless mobile telephone in the power-OFF state, wherein the wireless mobile telephone is incapable of displaying and browsing the useful informations and also of other operations of writing, reading and erasing data such as telephone numbers. In the above circumstances, the development of a novel wireless mobile terminal device free from the above problems is desirable.

Accordingly, it is an object of the present invention to provide a novel wireless mobile terminal device free from the above problems.

It is a further object of the present invention to provide a novel wireless mobile terminal device capable of displaying and browsing informations or data stored in an integrated or non-integrated memory, and hearing the voice informations stored in the integrated or non-integrated memory and also other operations of writing, reading and erasing data such as telephone numbers through accesses to the integrated or non-integrated memory not only in a power-ON state but also in a power-OFF state.

It is a still further object of the present invention to provide a novel wireless mobile telephone free from the above problems.

It is yet a further object of the present invention to provide a novel wireless mobile telephone capable of displaying and browsing informations or data stored in an integrated or non-integrated memory and hearing the voice informations stored in the integrated or non-integrated memory and also other operations of writing, reading and erasing data such as telephone numbers through accesses to the integrated or non-integrated memory not only in a power-ON state but also in a power-OFF state.

It is further more object of the present invention to provide a novel wireless mobile telephone electrically connectable to a wired telephone for transmitting telephone number data to the wired telephone for dialing the wired telephone based on the telephone number data even if the wireless mobile telephone is placed in a power-OFF state.

It is an additional object of the present invention to provide a novel wireless communication device free from the above problems.

It is a further additional object of the present invention to provide a novel wire-less communication device capable of at least one of displaying and browsing informations or data stored in an integrated or non-integrated memory, and hearing the voice information stored in the integrated or non-integrated memory and also other operations of writing, reading and erasing data such as telephone numbers through accesses to the integrated or non-integrated memory not only in a power-ON state but also in a power-OFF state.

It is further more object of the present invention to provide a novel wireless communication device electrically connectable to a wired external device for transmitting particular data to the wired external device for operating the wired external device based on the transmitted data even if the wireless mobile telephone is placed in a power-OFF state.

The present invention provides a wire-less communication device (100) including:
a main circuit capable of at least one operation of writing, reading and erasing data, and browsing and displaying informations as well hearing voice informations;
a radio unit (2) having at least a first function block of transmitting a radio wave a second function block operable in switching Channels and a third function block for receiving the radio wave; and
a power supply selector (8) electrically coupled to said radio unit (2) and said main circuit separately,
wherein in a first operational mode, said power supply selector (8) supplies a power to both said radio unit (2) and said main circuit, so as to place said radio unit (2) and said main circuit in operable-state, and wherein, in
a second operational mode said power supply selector(8) inhibits a power supply to said first function block of said radio unit (2) and to said second function block so as to place said first function block and said second function block of said radio unit (2) in inoperable-state and place said main circuit and the third function block of the radio unit in operable-state.
The above and other objects, features and advantages of the present invention will be apparent from the following descriptions.

Preferred embodiments according to the present invention will be described in detail with reference to the accompanying drawings.
FIG. 1 is a block diagram illustrative of an internal structure of a wireless mobile telephone in a preferred embodiment in accordance with the present invention.
FIG. 2 is a flow chart illustrative of one example of operations of the wireless mobile telephone of FIG. 1.
FIG. 3 is a block diagram illustrative of an internal structure of a modified novel wire-less mobile telephone in accordance with the present invention.

A first aspect of the present invention is a wire-less communication device (100) including:
a main circuit capable of at least one operation of writing, reading and erasing data, and browsing and displaying informations as well hearing voice informations;
a radio unit (2) having at least a first function block of transmitting a radio wave a second function block operable in switching Channels and a third function block for receiving the radio wave; and
a power supply selector (8) electrically coupled to said radio unit (2) and said main circuit separately,
wherein in a first operational mode, said power supply selector (8) supplies a power to both said radio unit (2) and said main circuit, so as to place said radio unit (2) and said main circuit in operable-state, and wherein, in
a second operational mode said power supply selector(8) inhibits a power supply to said first function block of said radio unit (2) and to said second function block so as to place said first function block and said second function block of said radio unit (2) in inoperable-state and place said main circuit and the third function block of the radio unit in operable-state.

It is preferable that the main circuit includes a control unit electrically coupled to the power supply selector for sending the power supply selector a first-mode control signal in the first operational mode so as to supply the power to both the radio unit and the main circuit, and sending the power supply selector a second-mode control signal in the second operational mode so as to inhibit the power supply to at least the first function block of the radio unit.

It is further preferable that the power supply selector is electrically connected through a first power supply line to at least the first function block of the radio unit, and also the power supply selector is electrically connected through a second power supply line to the main circuit, and in the first operational mode, the power supply selector supplies the power on both the first and second power supply lines and in the second operational mode, the power supply selector supplies the power on the second power supply line only.

It is also preferable that the radio unit further has a second function block for switching channels and a third function block for receiving the radio wave, and in the second operational mode, the power supply selector further inhibits the power supply to the second function block in addition to the first function block, so as to place at least both the first and second function blocks in inoperable state.

It is further preferable that the main circuit includes a control unit electrically coupled to the power supply selector for sending the power supply selector a first-mode control signal in the first operational mode so as to supply the power to both the radio unit and the main circuit, and sending the power supply selector a second-mode control signal in the second operational mode so as to inhibit the power supply to at least the first and second function blocks of the radio unit.

It is further more preferable that the power supply selector is electrically connected through a first power supply line to at least the first and second function blocks of the radio unit, and also the power supply selector is electrically connected through a second power supply line to the main circuit, and in the first operational mode, the power supply selector supplies the power on both the first and second power supply lines and in the second operational mode, the power supply selector supplies the power on the second power supply line only.

It is also preferable that in the second operational mode, the power supply selector furthermore inhibits the power supply to the third function block in addition to the first and second function blocks, so as to place at least all the first, second and third function blocks in inoperable state.

It is further more preferable that the main circuit includes a control unit electrically coupled to the power supply selector for sending the power supply selector a first-mode control signal in the first operational mode so as to supply the power to both the radio unit and the main circuit, and sending the power supply selector a second-mode control signal in the second operational mode so as to inhibit the power supply to all of the first, second and third function blocks of the radio unit.

It is moreover preferable that the power supply selector is electrically connected through a first power supply line to at least the first, second and third function blocks of the radio unit, and also the power supply selector is electrically connected through a second power supply line to the main circuit, and in the first operational mode, the power supply selector supplies the power on both the first and second power supply lines and in the second operational mode, the power supply selector supplies the power on the second power supply line only.

It is also preferable that the radio unit is electrically coupled to an antenna. It is also preferable that the main circuit includes : a control unit electrically coupled to the power supply selector for sending the power supply selector a first-mode control signal in the first operational mode so as to supply the power to both the radio unit and the main circuit, and sending the power supply selector a second-mode control signal in the second operational mode so as to inhibit the power supply to at least the first function block of the radio unit ; a memory electrically coupled to the control unit and also electrically connected through the second power supply line to the power supply selector, so that any access to the memory is permitted in both the first and second operational states ; and a display unit electrically coupled to the control unit and also electrically connected through the second power supply line to the power supply selector, so that any display of information and/or data is permitted in both the first and second operational states.

It is further preferable that the main circuit further includes : a clock signal oscillator electrically coupled to the radio unit and the control unit for supplying a clock signal, and the clock signal oscillator being also connected through the second power supply line to the power supply selector for receiving the power from the power supply selector in both the first and second operational states.

It is preferable to further comprise a connector electrically coupled to the control unit, and the connector being electrically connectable with a wired external device for allowing data transmission through the connector to the wired external device.

It is preferable to further comprise a connector electrically coupled to the main circuit, and the connector being electrically connectable with a wired external device for allowing data transmission through the connector to the wired external device.

It is also preferable that the wire-less communication device comprises a wire-less mobile terminal having an antenna which is electrically coupled to the radio unit for transmitting a radio wave from the antenna only in the first operational mode.

It is further preferable that the wire-less mobile terminal comprises a wire-less mobile telephone. It is preferable to further comprise a connector port electrically coupled to the main circuit, and the connector port being electrically connectable with a wired telephone for allowing data transmission through the connector port to the wired telephone. It is preferable that the data include at least a telephone number, so that the wired telephone displays the telephone number.

A second aspect of the present invention is a wire-less communication device including : a main circuit capable of at least one operation of writing, reading and erasing data, and browsing and displaying informations as well as hearing voice informations ; a radio unit operable for at least transmitting and receiving a radio wave ; and a power supply selector electrically coupled to the radio unit and the main circuit separately, wherein, in a first operational mode, the power supply selector supplies a power to both the radio unit and the main circuit, so as to place the radio unit and the main circuit in operable-state, and wherein, in a second operational mode, the power supply selector inhibits a power supply to the radio unit, so as to place the radio unit in inoperable-state and place the main circuit in operable-state.

It is preferable that the main circuit includes a control unit electrically coupled to the power supply selector for sending the power supply selector a first-mode control signal in the first operational mode so as to supply the power to both the radio unit and the main circuit, and sending the power supply selector a second-mode control signal in the second operational mode so as to inhibit the power supply to the radio unit.

It is also preferable that the radio unit is electrically coupled to an antenna. It is also preferable that the main circuit includes : a control unit electrically coupled to the power supply selector for sending the power supply selector a first-mode control signal in the first operational mode so as to supply the power to both the radio unit and the main circuit, and sending the power supply selector a second-mode control signal in the second operational mode so as to inhibit the power supply to the radio unit ; a memory electrically coupled to the control unit and also electrically connected through the second power supply line to the power supply selector, so that any access to the memory is permitted in both the first and second operational states ; and a display unit electrically coupled to the control unit and also electrically connected through the second power supply line to the power supply selector, so that any display of information and/or data is permitted in both the first and second operational states.

It is further preferable that the main circuit further includes : a clock signal oscillator electrically coupled to the radio unit and the control unit for supplying a clock signal, and the clock signal oscillator being also connected through the second power supply line to the power supply selector for receiving the power from the power supply selector in both the first and second operational states.

It is also preferable to further comprise a connector electrically coupled to the control unit, and the connector being electrically connectable with a wired external device for allowing data transmission through the connector to the wired external device.

It is also preferable to further comprise a connector electrically coupled to the main circuit, and the connector being electrically connectable with a wired external device for allowing data transmission through the connector to the wired external device.

It is also preferable that the wire-less communication device comprises a wire-less mobile terminal having an antenna which is electrically coupled to the radio unit for transmitting a radio wave from the antenna only in the first operational mode.

It is further preferable that the wire-less mobile terminal comprises a wireless mobile telephone. It is moreover preferable to further comprise a connector port electrically coupled to the main circuit, and the connector port being electrically connectable with a wired telephone for allowing data transmission through the connector port to the wired telephone. It is also preferable that the data include at least a telephone number, so that the wired telephone displays the telephone number.

A third aspect of the present invention is a wire-less mobile terminal device including : at least a memory for storing data ; a display unit for displaying any data or information ; a control unit electrically coupled to the memory and the display unit ; a radio unit electrically coupled to an antenna for transmitting and receiving a radio-wave, and the radio unit being also electrically coupled to the control unit ; and a power supply selector electrically connected through a first power supply line to the radio unit and electrically connected through a second power supply line to the control unit, the display unit, and the memory, and also the power supply selector electrically connected through a control signal line to the control unit, wherein, in a first operational mode, the control unit supplies a first-mode control signal to the power supply selector, so that the power supply selector supplies a power onto both the first and second power supply lines so as to place the radio unit, the control unit, the display unit, and the memory in operable-state, and wherein, in a second operational mode, the control unit supplies a second-mode control signal to the power supply selector, so that the power supply selector supplies the power onto only the second power supply line so as to place the control unit, the display unit, and the memory in operable-state, and place the radio unit in inoperable-state.

It is preferable to further include : a clock signal oscillator electrically coupled to the radio unit and the control unit for supplying a clock signal, and the clock signal oscillator being also connected through the second power supply line to the power supply selector for receiving the power from the power supply selector in both the first and second operational states.

It is preferable to further comprise a connector electrically coupled to the control unit, and the connector being electrically connectable with a wired external device for allowing data transmission through the connector to the wired external device.

It is also preferable that the wire-less mobile terminal comprises a wire-less mobile telephone. It is preferable to further comprise a connector port electrically coupled to the control unit, and the connector port being electrically connectable with a wired telephone for allowing data transmission through the connector port to the wired telephone. It is preferable that the data include at least a telephone number, so that the wired telephone displays the telephone number.

### PREFERRED EMBODIMENTS:

Preferred embodiments according to the present invention will be described in detail with reference to the drawings, where:

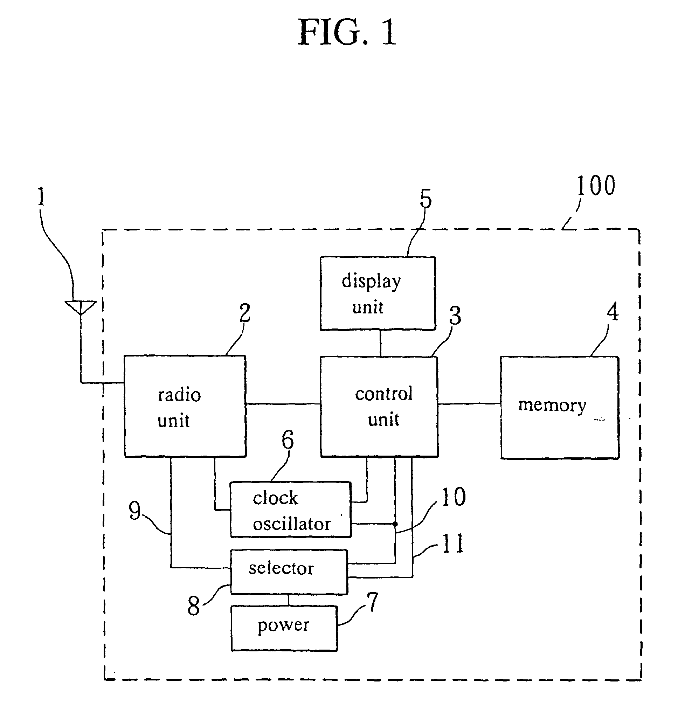

FIG. 1 is a block diagram illustrative of an internal structure of a wireless mobile telephone in accordance with the present invention;

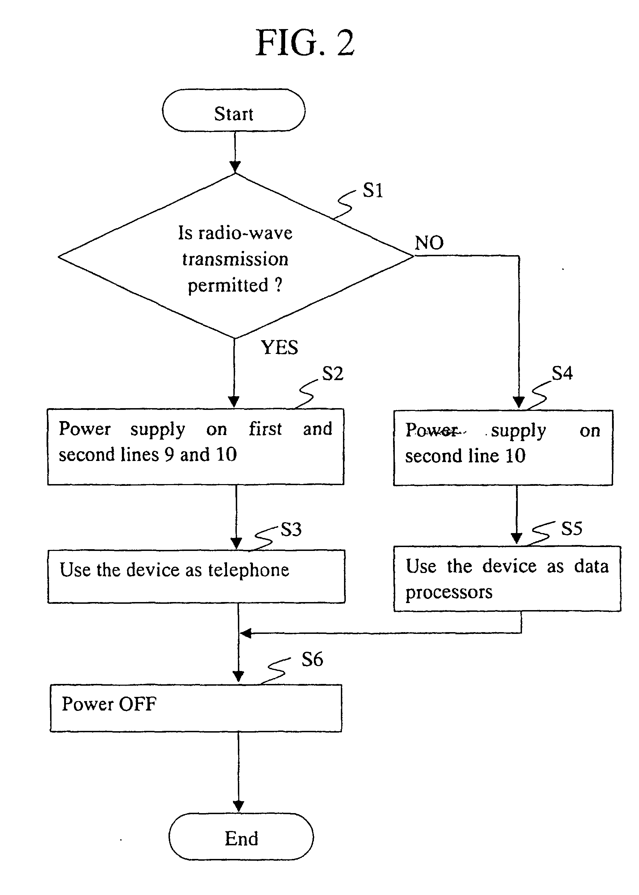

FIG. 2 is a flow chart illustrative of one example of operations of the wireless mobile telephone of FIG. 1;

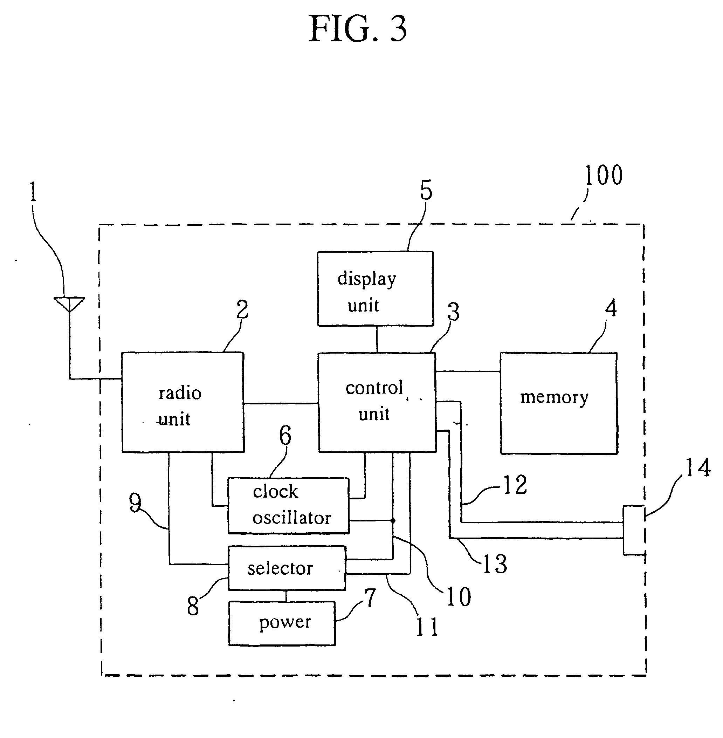

FIG. 3 is a block diagramm illustrative of an internal structure of a modified novel wire-less mobile telephone in accordance with the present invention.

A wireless mobile telephone 100 includes an antenna 1 for transmitting radio waves to a base station and receiving radio waves transmitted from the base station. The wireless mobile telephone 100 also includes a radio unit 2 electrically coupled to the antenna 1 for receiving input radio signals from the antenna 1, so that the radio unit 2 performs processings of the input radio signals, for example, amplification and demodulation of the input signals to generate internal signals. The wireless mobile telephone 100 also includes a control unit 3 electrically coupled to the radio unit 2 for receiving the internal signal from the radio unit 2. The radio unit 2 receives an internal signal from the control unit 3 for modulation and amplification of the internal signal to generate an output radio signal. This radio signal is supplied to the antenna 1 for transmitting a radio wave to the base station.

The wireless mobile telephone 100 also includes a memory 4 electrically coupled to the control unit 3 for reading and writing data such as telephone numbers and any useful informations through accesses to the memory 4 under the control by the control unit 3.

The wireless mobile telephone 100 also includes a display unit 5 electrically coupled to the control unit 3 for displaying the informations or the data such as the telephone numbers under the control by the control unit 3.

The wireless mobile telephone 100 is placed in a radio wave transmitting mode or a radio wave receiving mode under the control by the control unit 3. The wireless mobile telephone 100 further includes a clock signal oscillator 6 electrically coupled to the radio unit 2 and the control unit 3 for supplying a clock signal to the radio unit 2 and the control unit 3.

A power supply 7 is electrically coupled through a power supply selector 8. The power supply 7 may accommodate a battery. The power supply selector 8 is electrically connected through a first power supply line 9 to the radio unit 2. The power supply selector 8 is also electrically connected through a second power supply line 10 to the control unit 3, the clock oscillator 6, the display unit 5 and the memory 4 and any other elements than the radio unit 2. The power supply selector 8 is also connected through a power supply control signal line 11 to the control unit 3 for receiving a power supply control signal from the control unit 3, so that the power supply selector 8 separately allows a first power supply through the first power supply line 9 to the radio unit 2, and a second power supply through the second power supply line 10 to the control unit 3, the clock oscillator 6, the display unit 5 and the memory 4 and any other elements than the radio unit 2.

Optionally, a voice signal as an analog signal from a microphone not illustrated is transmitted to the radio unit 2 for modulation based on the voice signal to generate a modulated voice signal as a digital signal. The radio unit 2 also demodulates the digital voice signal to generate a voice signal as an analog signal for subsequently transmitting the analog voice signal to a speaker not illustrated. Those operations are made under the control by the control unit 3.

The above mobile telephone 100 has two different operational modes, for example, a telephone-operable mode and a telephone-inoperable mode. In the telephone-operable mode, the wireless mobile telephone 100 is permitted to perform all functions including normal telephone functions, for example, transmitting and receiving the radio wave through the antenna 1 and further any data processings, for example, displaying data on the display unit 5, wiring data into the memory 4, and reading and erasing the data from the memory 4 as well as browsing the informations stored in the memory 4 and hearing the voice informations stored in the memory 4. In this telephone-operable mode, the control unit 3 supplies a first-mode power control signal through the power control line 11 to the power supply selector 8, so that the power supply selector 8 allows both the first power supply through the first power supply line 9 to the radio unit 2, and the second power supply through the second power supply line 10 to the control unit 3, the clock oscillator 6 and any other elements than the radio unit 2, whereby the mobile telephone 100 is operable both as the wire-less mobile telephone and as the data processor for writing, reading and erasing data or informations and browsing the stored informations or data. Namely, in this mode, the operations of the wireless mobile telephone 100 are the same as the conventional wireless mobile telephone.

In the telephone-inoperable mode, the wireless mobile telephone 100 is permitted to perform partial functions but only of the data processings, for example, displaying data on the display unit 5, wiring data into the memory 4, and reading and erasing the data from the memory 4 as well as browsing the informations stored in the memory 4. Namely, in this telephone-inoperable mode, the wireless mobile telephone 100 is inhibited to transmit or emit the radio wave from the antenna 1 for performing the wireless telephone function.

In this telephone-inoperable mode, the control unit 3 supplies a second-mode power control signal through the power control line 11 to the power supply selector 8, so that the power supply selector 8 inhibits the first power supply through the first power supply line 9 to the radio unit 2, but allows only the second power supply through the second power supply line 10 to the control unit 3, the clock oscillator 6 and any other elements than the radio unit 2, whereby the radio unit 2 is placed in inoperable state, wherein the radio unit 2 does not perform the demodulation and modulation operations and also amplification operation. As a result, the wireless mobile telephone 100 is incapable of emitting or transmitting the radio wave. Namely, the wireless mobile telephone 100 is inoperable as the wireless mobile telephone but operable for the data processings, for example, displaying data on the display unit 5, wiring data into the memory 4, and reading and erasing the data from the memory 4 as well as browsing the informations stored in the memory 4 and hearing the voice information stored in the memory.

It is possible that the radio unit 2 includes three function blocks, for example, a first function block operable in transmitting the radio wave, a second function block operable in switching the channels, and a third functional block operable in receiving the radio wave. In order to suppress the radio wave transmission, it is necessary to inhibit the power supply to at least the first function block operable in transmitting the radio wave. It is preferable to inhibit the power supply to at least both the first function block operable in transmitting the radio wave and the second function block operable in switching the channels. It is, of course, possible to inhibit the power supply to all the first, second and third function blocks.

In view of the above, in this telephone-inoperable mode, the control unit 3 supplies the second-mode power control signal through the power control line 11 to the power supply selector 8, so that the power supply selector 8 inhibits the first power supply through the first power supply line 9 to at least the first function block of the radio unit 2, and preferable to both the first and second function blocks of the radio unit 2, and, of course, possibly to all the first, second and third function blocks of the radio unit 2.

Thus, it is necessary that the first power supply line 9 is connected to at least the first function block of the radio unit 2. In the telephone-inoperable mode, the power supply selector 8 inhibits the first power supply through the first power supply line 9, so that no power is supplied to at least the first function block of the radio unit 2, whereby the first function block of the radio unit 2 is inoperable, and the radio unit 2 is inoperable for transmitting the radio wave.

It is also preferable that the first power supply line 9 is connected to the first and second function blocks of the radio unit 2. In the telephone-inoperable mode, the power supply selector 8 inhibits the first power supply through the first power supply line 9, so that no power is supplied to the first and second function blocks of the radio unit 2, whereby the first and second function blocks of the radio unit 2 are inoperable, and the radio unit 2 is inoperable for transmitting the radio wave and switching the channel.

It is, of course, possible that the first power supply line 9 is connected to all the first, second and third function blocks of the radio unit 2. In the telephone-inoperable mode, the power supply selector 8 inhibits the first power supply through the first power supply line 9, so that no power is supplied to all the first, second and third function blocks of the radio unit 2, whereby all the first, second and third function blocks of the radio unit 2 are inoperable, and the radio unit 2 is inoperable for transmitting the radio wave, switching the channel and receiving the radio wave.

The above two different operational modes may be switched by operation of the user. When the above wireless mobile telephone moves to enter into the radio-wave-transmission inhibited area, then the user may operate the above wireless mobile telephone to place the same into the telephone-inoperable mode without power-OFF operation. Any measures for switching the wireless mobile telephone between the telephone-operable mode and the telephone-inoperable mode may be available. For example, the wireless mobile telephone has a power key (power push button), function keys (function push buttons), number keys (number push buttons) and a send key (send push button). The above switching operations between the two modes may be made by operating the keys, for example, concurrent pushing the power key and any other key such as a function key.

FIG. 2 is a flow chart illustrative of one example of operations of the wireless mobile telephone of FIG. 1. In a step S1, the user confirms here is the radio-wave-transmission-inhibited area or the permitted area. If the radio-wave-transmission-permitted area, in steps S2 and S3, the user operates the keys to place the wireless mobile telephone in the above telephone-operable mode, wherein the power is supplied to both the first and second power supply lines 9 and 10, whereby the wireless mobile telephone is operable as telephone and further any data processings, for example, displaying data on the display unit 5, wiring data into the memory 4, and reading and erasing the data from the memory 4 as well as browsing the informations stored in the memory 4 and hearing the voice informations stored in the memory 4. If the radio-wave-transmission-inhibited area, in steps S4 and S5, the user operates the keys to place the wireless mobile telephone in the above telephone-inoperable mode, wherein the power is supplied to only the second power supply line 10, whereby the wireless mobile telephone is inoperable as telephone but operable as any data processings, for example, displaying data on the display unit 5, wiring data into the memory 4, and reading and erasing the data from the memory 4 as well as browsing the informations stored in the memory 4 and hearing the voice informations stored in the memory 4. If the telephone function and also the above data processing functions become unnecessary, then the user may place the wireless mobile telephone into power-OFF state by usual operation, for example, pushing the power key.

As described above, in the above radio-wave-transmission-inhibited area, the novel wire-less mobile telephone is permitted to be kept in power-ON state, but in the above telephone-inoperable state. The wire-less mobile telephone is, of course, inoperable as the telephone, but operable for data processings, for example, displaying data on the display unit 5, wiring data into the memory 4, and reading and erasing the data from the memory 4 as well as browsing the informations stored in the memory 4 and hearing the voice information.

The above novel wire-less mobile telephone is, as described above, unable to call another telephone in the telephone-inoperable mode. It is, however, possible to modify the above novel wire-less mobile telephone to enable the novel wire-less mobile telephone in the telephone-inoperable mode to send a call through a wired telephone in the radio-wave-transmission inhibited area to a target telephone located at another area.

FIG. 3 is a block diagram illustrative of an internal structure of a modified novel wire-less mobile telephone in accordance with the present invention. A structural difference of the modified novel wire-less mobile telephone of FIG. 3 from the above novel wire-less mobile telephone of FIG. 1 is only in further providing a connector port for electrically coupling the modified novel wire-less mobile telephone to a wired telephone located in the radio-wave-transmission-inhibited area. As illustrated in FIG. 3, the modified novel wire-less mobile telephone 100 has a connector port 14 which is connected to the control unit 3 through a connect-detecting line 12 and a display data transmission line 13. Other structure of the modified novel wire-less mobile telephone 100 of FIG. 3 is the same as the novel wire-less mobile telephone of FIG. 1.

The following descriptions will focus on the above structural difference. The modified novel wire-less mobile telephone 100 is connectable via the connector port 14 to a wired telephone, for example, a public telephone. When the modified novel wire-less mobile telephone 100 become connected to the wired telephone, a connect-detecting signal is entered from the wired telephone and transmitted through the connector port 14 and the connect-detecting line 12 to the control unit 3, wherein the connect-detecting signal indicates that the modified novel wire-less mobile telephone 100 become connected to the wired telephone.

Upon receipt of the connect-detecting signal through the connect-detecting line 12, the control unit 3 transmits the second-mode power control signal through the power control line 11 to the power supply selector 8, so that the power supply selector 8 inhibits the first power supply through the first power supply line 9 to the radio unit 2, but allows only the second power supply through the second power supply line 10 to the control unit 3, the clock oscillator 6 and any other elements than the radio unit 2, whereby the radio unit 2 is placed in inoperable state, wherein the radio unit 2 does not perform the demodulation and modulation operations and also amplification operation.

As a result, the modified wireless mobile telephone 100 is incapable of emitting or transmitting the radio wave. Namely, the modified wireless mobile telephone 100 is inoperable as the wire-less mobile telephone but operable for transmitting a display data through the display data transmission line 13 and the connector port 14 to the wired telephone, whereby the wired telephone displays the transmitted data, for example, information about the target telephone number.

In detail, upon receipt of the connect-detecting signal through the connect-detecting line 12, the control unit 3 has an access to the memory 4 for reading the display data including the target telephone number from the memory 4. The control unit 3 then transmits the display data including the target telephone number through the display data transmission line 13 and through the connector port 14 to the wired telephone, whereby the wired telephone automatically displays the target telephone number on the display unit. The user may operate the wired telephone for dialing the target telephone number with reference to the displayed target telephone number. Alternatively, the wired telephone may automatically dials the target telephone number based on the displayed target telephone number. The user may call the target telephone through the wired telephone without transmitting the-radio wave from the wireless mobile telephone.

Accordingly, the modified novel wire-less mobile telephone in the telephone-inoperable mode is capable of sending a call through the wired telephone in the radio-wave-transmission inhibited area to a target telephone located at another area.

Of course, the modified novel wire-less mobile telephone in the telephone-inoperable mode is also capable of the data processings, for example, displaying data on the display unit 5, wiring data into the memory 4, and reading and erasing the data from the memory 4 as well as browsing the informations stored in the memory 4 and hearing the voice informations stored in the memory 4.

In the above preferred embodiments, the descriptions have been made by taking the wireless mobile telephone as one typical example. The above descriptions are, of course, applicable to any other wire-less communication devices including mobile type and non-mobile type, and terminal devices and non-terminal devices. An example of the wire-less non-mobile type device is a wire-less communication device mounted on a movable vehicle. If the movable vehicle moves into the radio-wave-transmission-inhibited area, then it is necessary to switch the wire-less communication device into the radio-wave-transmission-inhibited mode, wherein the wire-less communication device is incapable of transmitting the radio-wave. If the wire-less communication device is used in a communication system free of any host device or station, the device is not the terminal device. Unidirectional, bidirectional or multi-directional communications may be made between or among plural wireless mobile or non-mobile devices. The above present invention is also applicable to these communication systems.

In the above embodiments, the display unit 5 and the memory 4 are integrated in the main circuit which is exclusive of the radio unit. It is, of course, possible to modify the above structure that the main circuit does not integrate the display and the memory, wherein the display and the memory are external devices electrically connectable to the main circuit of the wireless communication device.

The above descriptions in connection with the modified novel wireless mobile telephone are also applicable to data transmissions to the wired devices for data transmissions through any wire to any target device or system.

Consequently, the present invention essentially provides the wire-less communication device includes a main circuit capable of at least one operation of writing, reading and erasing data, and browsing informations, a radio unit having at least a first function block of transmitting a radio wave, and a power supply selector electrically coupled to the radio unit and the main circuit separately. In the first operational mode, the power supply selector supplies a power to both the radio unit and the main circuit, so as to place the radio unit and the main circuit in operable-state. In the second operational mode, the power supply selector inhibits a power supply to at least the first function block of the radio unit, so as to place at least the first function block of the radio unit in inoperable-state and place the main circuit in operable-state.

Although the invention has been described above in connection with several preferred embodiments therefor, it will be appreciated that those embodiments have been provided solely for illustrating the invention, and not in a limiting sense. Numerous modifications and substitutions of equivalent materials and techniques will be readily apparent to those skilled in the art after reading the present application.

## Claims

1. A wire-less communication device (100) including:
a main circuit capable of at least one operation of writing, reading and erasing data, and browsing and displaying informations as well hearing voice informations;
a radio unit (2) having at least a first function block of transmitting a radio wave a second function block operable in switching Channels and a third function block for receiving the radio wave; and
a power supply selector (8) electrically coupled to said radio unit (2) and said main circuit separately,
wherein in a first operational mode, said power supply selector (8) supplies a power to both said radio unit (2) and said main circuit, so as to place said radio unit (2) and said main circuit in operable-state, **characterised by** a second operational mode wherein said power supply selector(8) inhibits a power supply to said first function block of said radio unit (2) and to said second function block so as to place said first function block and said second function block of said radio unit (2) in inoperable-state and place said main circuit and the third function block of the radio unit in operable-state.

2. The wire-less communication device (100) as claimed in claim 1, **characterized in that** said main circuit includes a control unit (3) electrically coupled to said power supply selector (8) for sending said power supply selector (8) a first-mode control signal in said first operational mode so as to supply said power to both said radio unit (2) and said main circuit, and sending said power supply selector (8) a second-mode control signal in said second operational mode so as to inhibit the power supply to at least said first function block of said radio unit.

3. The wire-less communication device (100) as claimed in claim 2, **characterized in that** said power supply selector (8) is electrically connected through a first power supply line (9) to at least said first function block of said radio unit (2), and also said power supply selector (8) is electrically connected through a second power supply line (10) to said main circuit, and in said first operational mode, said power supply selector (8) supplies the power on both said first and second power supply lines (9,10) and in said second operational mode, said power supply selector supplies the power on said second power supply line (10) only.

4. The wire-less communication device (100) as claimed in claim 1, **characterized in that** said main circuit includes a control unit (3) electrically coupled to said power supply selector (8) for sending said power supply selector (8) a first-mode control signal in said first operational mode so as to supply said power to both said radio unit (2) and said main circuit, and sending said power supply selector (8) a second-mode control signal in said second operational mode so as to inhibit the power supply to at least said first and second function blocks of said radio unit (2).

5. The wire-less communication device (100) as claimed in claim 4, **characterized in that** said power supply selector (8) is electrically connected through a first power supply line (9) to at least said first and second function blocks of said radio unit (2), and also said power supply selector (8) is electrically connected through a second power supply line (10) to said main circuit, and in said first operational mode, said power supply selector supplies (8) the power on both said first and second power supply lines (9,10) and in said second operational mode, said power supply selector (8) supplies the power on said second power supply line (10) only.

6. The wire-less communication device (100) as claimed in claim 1, **characterized in that** said radio unit (2) is electrically coupled to an antenna (1).

7. The wire-less communication device (100) as claimed in claim 1, **characterized in that** said main circuit includes:
a control unit (3) electrically coupled to said power supply selector (8) for sending said power supply selector (8) a first-mode control signal in said first operational mode so as to supply said power to both said radio unit (2) and said main circuit, and sending said power supply selector (8) a second-mode control signal in said second operational mode so as to inhibit the power supply to at least said first function block of said first function block of said radio unit (2);
a memory (4) electrically coupled to said control unit and also electrically connected through said second power supply line (10) to said power supply selector (8), so that any access to said memory (4) is permitted in both said first and second operational states; and
a display unit (5) electrically coupled to said control unit (3) and also electrically connected through said second powder supply line (10) to said power supply selector (8), so that any display of information and/or data is permitted in both said first and second operational states.

8. The wire-less communication device (100) as claimed in claim 7, **characterized in that** said main circuit further includes:
a clock signal oscillator (6) electrically coupled to said radio unit (2) and said control unit (3) for supplying a. clock signal, and said clock signal oscillator being also connected through said second power supply line (10) to said power supply selector (8) for receiving the power from said power supply selector (8) in both said first and second operational states.

9. The wire-less communication device (100) as claimed in claim 7, further comprising a connector (14) electrically coupled to said control unit (3), and said connector (14) being electrically connectable with a wired external device for allowing data transmission through said connector (14) to said wired external device.

10. The wire-less communication devise (100) as claimed in claim 1, further comprising a connector (14) electrically coupled to said main circuit, and said connector (14) being electrically connectable with a wired external device for allowing data transmission through said connector (14) to said wired external device.

11. The wire-less communication device (100) as claimed in claim 1, **characterized in that** said wire-less communication device (100) comprises a wire-less mobile terminal having an antenna (1) which is electrically coupled to said radio unit (2) for transmitting a radio wave from said antenna (1) only in said first operational mode.

12. The wire-less communication device (100) as claimed in claim 11, **characterized in that** said wire-less mobile terminal comprises a wire-less mobile telephone (100).

13. The wire-less communication device (100) as claimed in claim 12, further comprising a connector port (14) electrically coupled to said main circuit, and said connector port (14) being electrically connectable with a wired telephone for allowing data transmission through said connector port (14) to said wired telephone.

14. The wire-less communication device (100) as claimed in claim 13, **characterized in that** said data include at least a telephone number, so that said wired telephone displays said telephone number.

## Patentansprüche

1. Schnurloses Kommunikationsgerät (100), das umfasst:
einen Hauptschaltkreis, der in der Lage ist, mindestens eine Operation des Schreibens, Lesens und Löschens von Daten sowie des Bearbeitens oder Durchsuchens von Informationen durchzuführen, sowie Sprachinformationen anzuhören;
eine Funkeinheit (2) mit mindestens einem ersten Funktionsblock zum Senden einer Funkwelle, einem zweiten Funktionsblock zum Umschalten von Kanälen und einem dritten Funktionsblock zum Empfangen der Funkwelle; und
eine Stromversorgungsauswahleinheit (8), die separat elektrisch mit der Funkeinheit (2) und mit dem Hauptschaltkreis verbunden ist, wobei in einem ersten Betriebsmodus die Stromversorgungsauswahleinheit (8) eine Stromversorgung sowohl an die Funkeinheit (2) als auch den Hauptschaltkreis anlegt, um so die Funkeinheit (2) und den Hauptschaltkreis in einen eingeschalteten Betriebszustand zu versetzen,
**dadurch gekennzeichnet,**
**dass** in einem zweiten Betriebsmodus die Stromversorgungsauswahleinheit (8) eine Stromversorgung an dem ersten Funktionsblock der Funkeinheit (2) und den zweiten Funktionsblock unterdrückt, um so den ersten Funktionsblock und den zweiten Funktionsblock der Funkeinheit (2) in einen ausgeschalteten Zustand zu versetzen und den Hauptschaltkreis und den dritten Funktionsblock der Funkeinheit in einen eingeschalteten Zustand zu versetzen.

2. Schnurloses Kommunikationsgerät nach Anspruch 1, wobei der Hauptschaltkreis eine Steuereinheit (3) aufweist, die elektrisch mit der Stromversorgungsauswahleinheit (8) verbunden ist, um der Stromversorgungsauswahleinheit (8) ein Erster-Modus-Steuersignal in dem ersten Betriebsmodus zu senden, um so die Stromversorgung sowohl an die Funkeinheit (2) als auch an den Hauptschaltkreis anzulegen, und um der Stromversorgungsauswahleinheit (8) ein Zweiter-Modus-Steuersignal im zweiten Betriebsmodus bereitzustellen, um so die Stromversorgung zumindest in dem ersten Funktionsblock der Funkeinheit zu unterdrücken.

3. Schnurloses Kommunikationsgerät (100) nach Anspruch 2, wobei die Stromversorgungsauswahleinheit (8) elektrisch über eine erste Stromversorgungsleitung (9) mit mindestens dem ersten Funktionsblock der Funkeinheit (2) verbunden ist und ebenfalls die Stromversorgungsauswahleinheit (8) elektrisch über eine zweite Stromversorgungsleitung (10) mit dem Hauptschaltkreis verbunden ist, wobei in dem ersten Betriebsmodus die Stromversorgungsauswahleinheit (8) die Stromversorgung sowohl an die erste als auch an die zweite Stromversorgungsleitung (9, 10) anlegt und wobei die Stromversorgungsauswahleinheit (8) in dem zweiten Betriebsmodus die Stromversorgung lediglich an die zweite Stromversorgungsleitung (10) anlegt.

4. Schnurloses Kommunikationsgerät (100) nach Anspruch 1, wobei der Hauptschaltkreis eine Steuereinheit (3) umfasst, die elektrisch mit der Stromversorgungsauswahleinheit (8) verbunden ist, um der Stromversorgungsauswahleinheit (8) ein Erster-Modus-Steuersignal in dem ersten Betriebsmodus zu senden, so dass die Stromversorgung sowohl an die Funkeinheit (2) als auch an den Hauptschaltkreis angelegt wird und um der Stromversorgungsauswahleinheit (8) ein Zweiter-Modus-Steuersignal in dem zweiten Betriebsmodus zu senden, um so die Stromversorgung zumindest an dem ersten und zweiten Funktionsblock der Funkeinheit (2) zu unterdrücken.

5. Schnurloses Kommunikationsgerät (100) nach Anspruch 4, wobei die Stromversorgungsauswahleinheit (8) elektrisch über eine erste Stromversorgungsleitung (9 mit mindestens dem ersten und zweiten Funktionsblock der Funkeinheit (2) verbunden ist und die Stromversorgungsauswahleinheit (9) ebenfalls elektrisch über eine zweite (10) Stromversorgungsleitung mit dem Hauptschaltkreis verbunden ist und wobei in dem ersten Betriebsmodus die Stromversorgungsauswahleinheit (8) die Stromversorgung sowohl an die erste als auch an die zweite Stromversorgungsleitung (9, 10) anlegt und wobei in dem zweiten Betriebsmodus die Stromversorgungsauswahleinheit (8) die Stromversorgung lediglich an die zweite Stromversorgungsleitung (10) anlegt.

6. Schnurloses Kommunikationsgerät (100) nach Anspruch 1, wobei die Funkeinheit (2) elektrisch mit einer Antenne (1) gekoppelt ist.

7. Schnurloses Kommunikationsgerät (100) nach Anspruch 1, wobei der Hauptschaltkreis umfasst:
eine Steuereinheit (3), die elektrisch mit der Stromversorgungsauswahleinheit (8) verbunden ist, um der Stromversorgungsauswahleinheit (8) ein Erster-Modus-Steuersignal in dem ersten Betriebsmodus zu senden, um so die Stromversorgung sowohl an die Funkeinheit (2) als auch an den Hauptschaltkreis anzulegen, und um der Stromversorgungsauswahleinheit (8) ein zweiter Modussteuersignal zu dem zweiten Betriebsmodus zu senden, um so die Stromversorgung zumindest zu dem ersten Funktionsblock der Funkeinheit (2) zu unterdrücken;
ein Speicher (4), der elektrisch mit der Steuereinheit verbunden ist, und ebenfalls elektrisch durch die zweite Stromversorgungsleitung (10) mit der Stromversorgungsauswahleinheit (8) verbunden ist, so dass jeder Zugriff auf den Speicher (4) sowohl in dem ersten als auch in dem zweiten Betriebszustand erlaubt ist; und
eine Anzeigeeinheit (5) , die elektrisch mit der Steuereinheit (3) verbunden ist und ebenfalls elektrisch über die zweite Stromversorgungsleitung (10) mit der Stromversorgungsauswahleinheit (8) verbunden ist, so dass jede Anzeige einer Information und/oder Daten sowohl in dem ersten als auch in dem zweiten Betriebszustand zugelassen ist.

8. Schnurloses Kommunikationsgerät (100) nach Anspruch 7, wobei der Hauptschaltkreis weiterhin umfasst:
einen Taktsignaloszillator (6), der elektrisch mit der Funkeinheit (2) und der Steuereinheit (3) verbunden ist, um ein Taktsignal bereitzustellen, und wobei der Taktsignaloszillator auch über die zweite Stromversorgungsleitung (10) mit der Stromversorgungsauswahleinheit (8) verbunden ist, um die Stromversorgung von der Stromversorgungsauswahleinheit (8) sowohl in dem ersten als auch in dem zweiten Betriebszustand zu empfangen.

9. Schnurloses Kommunikationsgerät (100) nach Anspruch 7, wobei eine Verbindungseinrichtung (14) vorgesehen ist, die elektrisch mit der Steuereinheit (3) verbunden ist und wobei die Verbindungseinrichtung (14) elektrisch mit einem drahtgebundenen externen Gerät verbindbar ist, um eine Datenübertragung durch die Verbindungseinrichtung (14) mit dem drahtgebundenen externen Gerät zu ermöglichen.

10. Schnurloses Kommunikationsgerät (100) nach Anspruch 1, wobei eine Verbindungseinrichtung (14) vorgesehen ist, die elektrisch mit dem Hauptschaltkreis verbunden ist, wobei die Verbindungseinrichtung (14) elektrisch mit einem drahtgebundenen externen Gerät verbindbar ist, um eine Datenübertragung durch die Verbindungseinrichtung (14) an das drahtgebundene externe Gerät zu ermöglichen.

11. Schnurloses Kommunikationsgerät (100) nach Anspruch 1, wobei das schnurlose Kommunikationsgerät (100) ein schnurloses mobiles Endgerät mit einer Antenne (1) umfasst, die elektrisch mit der Funkeinheit verbunden ist, um eine Funkwelle von der Antenne (1) nur in dem ersten Betriebsmodus zu übertragen.

12. Schnurloses Kommunikationsgerät (100) nach Anspruch 11, wobei das schnurlose mobile Endgerät ein schnurloses Mobiltelefon (100) umfasst.

13. Schnurloses Kommunikationsgerät (100) nach Anspruch 12, das weiterhin eine Verbindungsschnittstelle (14) umfasst, die elektrisch mit dem Hauptschaltkreis verbunden ist, wobei die Verbindungsschnittstelle (14) elektrisch mit einem drahtgebundenen Telefon verbindbar ist, um eine Datenübertragung durch die Verbindungsschnittstelle (14) mit dem drahtgebundenen Telefon zu ermöglichen.

14. Schnurloses Kommunikationsgerät (100) nach Anspruch 13, **dadurch gekennzeichnet, dass** die Daten mindestens eine Telefonnummer umfassen, so dass das drahtgebundene Telefon die Telefonnummer anzeigt.

## Revendications

1. Dispositif de communication sans fil (100) comprenant :
un circuit principal capable de procéder à au moins une opération d'écriture, de lecture et d'effacement de données, et de navigation et d'affichage d'informations ainsi que d'écoute d'informations vocales ;
une unité radio (2) ayant au moins un premier bloc de fonction pour transmettre une onde radio, un second bloc de fonction exploitable pour commuter des voies et un troisième bloc de fonction pour recevoir l'onde radio ; et
un sélecteur d'alimentation électrique (8) électriquement couplé à ladite unité radio (2) et au dit circuit principal d'une manière séparée,
dans lequel, dans un premier mode opérationnel, ledit sélecteur d'alimentation électrique (8) délivre une puissance à la fois à ladite unité radio (2) et au dit circuit principal, de manière à placer ladite unité radio (2) et ledit circuit principal dans un état exploitable,
**caractérisé par** un second mode opérationnel dans lequel ledit sélecteur d'alimentation électrique (8) bloque une alimentation électrique vers ledit premier bloc de fonction dudit unité radio (2) et vers ledit second bloc de fonction de manière à placer ledit premier bloc de fonction et ledit second bloc de fonction de ladite unité radio (2) dans un état non exploitable et à placer ledit circuit principal et le troisième bloc de fonction de l'unité radio dans un état exploitable.

2. Dispositif de communication sans fil (100) tel que revendiqué dans la revendication 1, **caractérisé en ce que** ledit circuit principal comprend une unité de commande (3) électriquement couplée au dit sélecteur d'alimentation électrique (8) pour envoyer au dit sélecteur d'alimentation électrique (8) un signal de commande de premier mode dans ledit premier mode opérationnel de manière à délivrer ladite puissance vers à la fois ladite unité radio (2) et ledit circuit principal, et envoyer au dit sélecteur d'alimentation électrique (8) un signal de commande de second mode dans ledit second mode opérationnel de manière à bloquer l'alimentation électrique vers au moins ledit premier bloc de fonction de ladite unité radio.

3. Dispositif de communication sans fil (100) tel que revendiqué dans la revendication 2, **caractérisé en ce que** ledit sélecteur d'alimentation électrique (8) est électriquement connecté via une première ligne d'alimentation (9) au moins audit premier bloc de fonction de ladite unité radio (2) et, également, ledit sélecteur d'alimentation électrique (8) est électriquement connecté via une seconde ligne d'alimentation (10) au dit circuit principal et, dans un premier mode opérationnel, ledit sélecteur d'alimentation électrique (8) délivre la puissance sur à la fois ladite première et ladite seconde lignes d'alimentation (9, 10) et, dans ledit second mode opérationnel, ledit sélecteur d'alimentation électrique délivre la puissance sur ladite seconde ligne d'alimentation (10) uniquement.

4. Dispositif de communication sans fil (100) tel que revendiqué dans la revendication 1, **caractérisé en ce que** ledit circuit principal comprend une unité de commande (3) électriquement couplée au dit sélecteur d'alimentation électrique (8) pour envoyer au dit sélecteur d'alimentation électrique (8) un signal de commande de premier mode dans ledit premier mode opérationnel de manière à délivrer ladite puissance vers à la fois ladite unité radio (2) et ledit circuit principal, et envoyer au dit sélecteur d'alimentation électrique (8) un signal de commande de second mode dans ledit second mode opérationnel de manière à bloquer l'alimentation électrique vers au moins lesdits premier et second blocs de fonction de ladite unité radio (2).

5. Dispositif de communication sans fil (100) tel que revendiqué dans la revendication 4, **caractérisé en ce que** ledit sélecteur d'alimentation électrique (8) est électriquement connecté via une première ligne d'alimentation (9) à au moins lesdits premier et second blocs de fonction de ladite unité radio (2) et, également, ledit sélecteur d'alimentation électrique (8) est électriquement connecté via une seconde ligne d'alimentation (10) au dit circuit principal et, dans ledit premier mode opérationnel, ledit sélecteur d'alimentation électrique (8) délivre la puissance sur à la fois ladite première et ladite seconde lignes d'alimentation (9, 10) et, dans ledit second mode opérationnel, ledit sélecteur d'alimentation électrique (8) délivre la puissance sur ladite seconde ligne d'alimentation (10) uniquement.

6. Dispositif de communication sans fil (100) tel que revendiqué dans la revendication 1, **caractérisé en ce que** ladite unité radio (2) est électriquement couplée à une antenne (1).

7. Dispositif de communication sans fil (100) tel que revendiqué dans la revendication 1, **caractérisé en ce que** ledit circuit principal comprend :
une unité de commande (3) électriquement couplée au dit sélecteur d'alimentation électrique (8) pour envoyer au dit sélecteur d'alimentation électrique (8) un signal de commande de premier mode dans ledit premier mode opérationnel de manière à délivrer ladite puissance vers à la fois ladite unité radio (2) et ledit circuit principal, et envoyer au dit sélecteur d'alimentation électrique (8) un signal de commande de second mode dans ledit second mode opérationnel de manière à bloquer l'alimentation électrique vers au moins ledit premier bloc de fonction dudit premier bloc de fonction de ladite unité radio (2) ;
une mémoire (4) électriquement couplée à ladite unité de commande et également électriquement connectée via ladite seconde ligne d'alimentation (10) au dit sélecteur d'alimentation électrique (8) de manière à ce que tout accès à ladite mémoire (4) soit autorisé dans à la fois lesdits premier et second états opérationnels ; et
un écran d'affichage (5) électriquement couplé à ladite unité de commande (3) et également électriquement connecté via ladite seconde ligne d'alimentation (10) au dit sélecteur d'alimentation électrique (8) de manière à ce que tout affichage d'informations et/ou de données soit autorisé dans à la fois lesdits premier et second états opérationnels.

8. Dispositif de communication sans fil (100) tel que revendiqué dans la revendication 7, **caractérisé en ce que** ledit circuit principal comprend en outre :
un oscillateur de signal d'horloge (6) électriquement couplé à ladite unité radio (2) et à ladite unité de commande (3) pour délivrer un signal d'horloge, et à ladite oscillateur de signal d'horloge étant également connecté via ladite seconde ligne d'alimentation (10) au dit sélecteur d'alimentation électrique (8) pour recevoir la puissance depuis ledit sélecteur d'alimentation électrique (8) dans à la fois lesdits premier et second états opérationnels.

9. Dispositif de communication sans fil (100) tel que revendiqué dans la revendication 7, comprenant en outre un connecteur (14) électriquement couplé à ladite unité de commande (3), et ledit connecteur (14) étant électriquement connectable à un dispositif câblé externe pour permettre la transmission de données via ledit connecteur (14) vers ledit dispositif câblé externe.

10. Dispositif de communication sans fil (100) tel que revendiqué dans la revendication 1, comprenant en outre un connecteur (14) électriquement couplé au dit circuit principal, et ledit connecteur (14) étant électriquement connectable à un dispositif câblé externe pour permettre la transmission de données via ledit connecteur (14) vers ledit dispositif câblé externe.

11. Dispositif de communication sans fil (100) tel que revendiqué dans la revendication 1, **caractérisé en ce que** ledit dispositif de communication sans fil (100) comprend un terminal mobile sans fil ayant une antenne (1) qui est électriquement couplée à ladite unité radio (2) pour transmettre une onde radio depuis ladite antenne (1) uniquement dans ledit premier mode opérationnel.

12. Dispositif de communication sans fil (100) tel que revendiqué dans la revendication 11, **caractérisé en ce que** ledit terminal mobile sans fil comprend un téléphone mobile sans fil (100).

13. Dispositif de communication sans fil (100) tel que revendiqué dans la revendication 12, comprenant en outre un port connecteur (14) électriquement couplé au dit circuit principal, et ledit port connecteur (14) étant électriquement connectable à un téléphone filaire pour permettre la transmission de données via ledit port connecteur (14) vers ledit téléphone filaire.

14. Dispositif de communication sans fil (100) tel que revendiqué dans la revendication 13, **caractérisé en ce que** lesdites données comprennent au moins un numéro de téléphone de manière à ce que ledit téléphone filaire affiche ledit numéro de téléphone.
